# EUROPEAN PATENT SPECIFICATION

(11) **EP 1 828 316 B1**
(45) Date of publication and mention of the grant of the patent: **24.01.2018**
(21) Application number: 05819066.1
(22) Date of filing: 16.12.2005
(51) Int. Cl.: C09C 1/00, C09C 1/62, C09C 1/64, C09C 1/66

(54) **HIGHLY ANTI-CORROSIVE THIN PLATELET-LIKE METAL PIGMENTS, PREPARING METHOD OF THE SAME, AND COLORED INTERFERENCE PIGMENTS HAVING METALLIC LUSTER BASED ON THE SAME**
STARK ANTIKORROSIVE, DÜNNE,PLÄTTCHENFÖRMIGE METALLPIGMENTE, HERSTELLUNGSVERFAHREN DAFÜR UND DARAUFBASIERENDE FARBGLANZPIGMENTE MIT METALLISCHEM GLANZ
PIGMENTS METALLIQUES DU TYPE LAMELLES MINCES FORTEMENT ANTICORROSIFS, PROCEDE DE PREPARATION DE CEUX-CI ET PIGMENTS DE POLARISATION COLORES A ECLAT METALLIQUE CONTENANT CEUX-CI

(30) Priority: 24.12.2004 JP 2004373209; 07.07.2005 JP 2005199266
(43) Date of publication of application: 05.09.2007
(73) Proprietor: Merck Patent GmbH, 64293 Darmstadt (DE)
(72) Inventor: LI, Bangyin, Iwaki-shi, Fukushima-ken 970-8047 (JP); NAKAMURA, Nobuaki, Iwaki-shi, Fukushima-ken 971-8172 (JP); NITTA, Katsuhisa, Iwaki-shi, Fukushima-Ken 971-8152 (JP); TAKAHASHI, Norio, Iwaki-shi, Fukushima-ken 970-8026 (JP)
(86) International application number: PCT/EP2005/013594
(87) International publication number: WO 2006/066825

(56) References cited:
- EP-A- 1 553 144
- WO-A-00/09617
- WO-A-00/43457
- WO-A-03/014228

## Description

The present invention relates to novel colored interference pigments having metallic luster and use of the same.

Commercially available pearl-luster pigments which use thin platelet-like mica substrates coated with highly refractive metal oxides (hereinafter referred to as "interference color layer") such as titanium oxide etc. to exhibit color through interference are well known. However, since the mica is semi-transparent, its reflectivity is low; therefore, expression of interference color by action of interference is not fully achieved. Thus there appear colored interference pigments where metal, which is opaque and has a high optical reflectance, is used as thin platelet-like substrate and an interference color layer (such as titanium oxide, etc) is coated on its surface (see for example, patent document 1). In these colored interference pigments, the interference color layer is directly coated by means of the so-called sol-gel method avoiding an aqueous treatment, since thin platelet-like metal substrates have a disadvantage that they can easily react with water and easily be oxidized.

Further, goniochromatic pigments (multi-chromatic colored interference pigments) have also been known wherein on the surface of thin platelet-like metal substrate, the first coating layer is formed using hydrated silicon oxide as an example of a substance having a low refractive index by the so-called sol-gel method or the vapor-phase method, then another metal oxide having a high refractive index is coated thereon through vapor phase reaction, and this process is repeated to give a hue change (color travel effect) associated with the viewing angle (for example, patent document 2).

Moreover, in order to obtain a highly anti-corrosive layer (passivation layer), it has been known that there is a product which is treated with phosphates, etc, (e.g. patent document 3), a product which is treated with organic phosphates. (e.g. patent document 4), a product which is treated only with silica (patent document 5), a product for which a treatment with volatile phosphorus compounds and volatile nitrogen containing organosilicon compounds by the vapor phase method is carried out (patent document 6), and so forth.

In patent document 3, which corresponds to WO 00/09617 A, multi-layer pigments based on plate-like metal substrates are disclosed, whose coating with two or more metal oxide layers is carried out exclusively in the aqueous medium in a one-pot reaction method. The pigments contain an amorphous glassy layer of SiO₂, B₂O₃ and/or phosphate.

However, in these conventional methods, there is the disadvantage that expensive raw materials have to be used or that the inherent smoothness of the surface of thin platelet-like metal substrate is not maintained but is deteriorated or the dispersibility of particles is insufficient resulting in irregular reflection whereby the reflected light on the surface of thin metal platelets can not be adequately utilized. Accordingly, even when the upper interference color layer is further coated thereon, it is not possible to sufficiently achieve the expression of the interference color.

On the other hand, as metal pigment which can be treated in an aqueous system where the cost is low and the operation is easy in terms of facilities, thin platelet-like metal pigments with improvement in corrosion resistance against acid aqueous solutions have been disclosed (patent document 7). According to such anti-corrosive metal pigments, it is possible to adopt a method in which hydrated metal oxide obtained by neutralization hydrolysis using water-soluble metal salts and alkali or by thermal hydrolysis of water-soluble metal salts in an aqueous system is coated, filtered, dried and, if desired, calcined (hereinafter generally defined as a "wet-process method" throughout the specification including the claims) ; however, the metal pigments were still unable to provide sufficient corrosion resistance in a basic condition.

Patent Document 1: JP, A, 01-110568
Patent Document 2: JP, A, 07-258579
Patent Document 3: DE19836810.0
Patent Document 4: JP, A, 03-74472
Patent Document 5: JP, A, 08-209025
Patent Document 6: JP, A, 07-292279
Patent Document 7: JP, A, 2003-41150, corresponding to WO 03/014228 A

Document WO 00/43457 A discloses a metallic effect pigment having a corrosion resistant reflective core of reflectivity from 40 % to 80 %. The pigment may optionally contain a non-interferent layer of an oxide of a group 13 to group 15 element, which may be of tin oxide.

In EP 1 553 144 A1, colored interference pigments having metallic luster are described, which comprise, on the surface of metal substrates being treated against corrosion in a non-aqueous system, a binder layer comprising hydrated tin oxide and thereon a hydrated iron oxide layer.

### [Disclosure of the Invention]

### [Problems to be solved by the Invention]

An object of the present invention is to provide colored interference pigments having a metallic luster, a high interference coloration and a color travel effect, wherein it is possible to adopt the so-called wet process method (even in a basic aqueous solution) for coating secondary hydrated metal oxide onto the surface of highly anti-corrosive thinplatelet-like metal pigments.

In order to solve the above-mentioned problems, the inventors of the present invention have eagerly carried out investigations and found that highly anti-corrosive thin platelet-like metal pigments formed by treating the surface of thin platelet-like metal substrates with phosphoric acid compounds and/or boric acid compounds, and thereafter further coating thereon a layer containing hydrated tin oxide are able to solve the above-mentioned problems whereupon the present invention has been accomplished.

Accordingly, the present invention is based on highly anti-corrosive thin platelet-like metal pigments comprising, on the surface of thin platelet-like metal substrates, a layer formed by treating said surface with phosphoric acid compounds and/or boric acid compounds, and a layer containing hydrated tin oxide as an outermost layer.

The present invention further is based on highly anti-corrosive thin platelet-like metal pigments, wherein on the surface of the thin platelet-like metal substrates there are subsequently formed: a layer formed by treating said surface with phosphoric acid compounds and/or boric acid compounds; a hydrated metal oxide layer formed of one or more metals selected from the group consisting of silicon, aluminum, zirconium and titanium; and a layer containing hydrated tin oxide.

The present invention further is based on the above-mentioned highly anti-corrosive thin platelet-like metal pigments, characterized in that the thin platelet-like metal substrates are metallic pigments having metallic luster and are of aluminum flakes.

The present invention further is based on the above-mentioned highly anti-corrosive thin platelet-like metal pigments, wherein the hydrated metal oxide is hydrated silicon oxide.

The present invention further is based on the above-mentioned highly anti-corrosive thin platelet-like metal pigments, characterized in that the amount of phosphoric acid compounds and/or boric acid compounds used corresponds to 0.0001g - 0.1g as P₂O₅ and/or B₂O₃ per unit area of the surface (m²) of the thin platelet-like metal substrates; the amount of metal compounds used for preparing a hydrated metal oxide coated layer corresponds to 0.01g - 1.0g as metal oxide per unit area of the surface (m²) of the thin platelet-like metal substrates; and the amount of tin compounds used for preparing a hydrated tin oxide layer corresponds to 0.0008g - 1.0g as tin oxide (SnO₂) per unit area of the surface (m²) of the thinplatelet-like metal substrates.

The present invention relates to colored interference pigments having metallic luster, characterized in that the surface of the above-mentioned highly anti-corrosive thin platelet-like metal pigments is further coated with a secondary hydrated metal oxide layer comprising one or more layers according to claim 1.

The present invention further relates to the above-mentioned colored interference pigments having metallic luster, characterized in that the secondary hydrated metal oxide layer is prepared by a wet process method, a chemical vapor deposition method, or a physical vapor deposition method.

The present colored interference pigments having metallic luster are characterized in that the secondary hydrated metal oxide layer is a layer containing one or more hydrated metal oxides of one or more metals selected from the group consisting of titanium, aluminum, zirconium, tin, zinc, chromium, cobalt, silicon and boron.

The present invention also relates to the above-mentioned colored interference pigments having metallic luster, characterized in that the secondary hydrated metal oxide layer is a multi-coated layer having different hydrated metal oxides.

The present invention further relates to the above-mentioned colored interference pigments having metallic luster, characterized in that the secondary hydrated metal oxide layer is a multi-coated layer formed by alternately coating a hydrated metal oxide layer having a high refractive index and a hydrated metal oxide layer having a low refractive index.

The present invention also relates to the use of the above-mentioned colored interference pigments having metallic luster in paints, powder coatings and coated films, inks, security printing inks and printed matters, plastics, pellets and plastic moldings, and cosmetics.

The present invention further relates to a composition comprising the above-mentioned colored interference pigments having metallic luster in combination with one or more further pigments selected from the group consisting of organic pigments, inorganic pigments, effect pigments, fillers, and functional pigments.

The present invention has been completed based on a novel idea that thin platelet-like metal pigments having corrosion resistance in strong basic conditions can be applied to a wide range of environment-protection type paints such as water-borne paints.

The above-mentioned highly anti-corrosive thin platelet-like metal pigments provide good corrosion resistance without damaging the smoothness of the surface of the thin platelet-like metal substrates, and can be applied to water-borne paints of an environmental protection type over a wide range of pHs since they rarely produce hydrogen gas in an aqueous system and even in a basic aqueous solution. Further, it is also made possible to carry out the coating of a secondary hydrated metal oxide layer for interference color development by a wet process method.

As for the highly anti-corrosive thin platelet-like metal pigments, although the mechanism of property changes resulted from the combination of the treatment with phosphoric acid compounds and/or boric acid compounds and a coating layer containing hydrated tin oxide is not necessarily clear; however, from the above-mentioned combination, it is possible for highly anti-corrosive thin platelet-like metal pigments not only to acquire anti-corrosive property in basic conditions through passivation , but also to obtain surface denseness and smoothness at a level which can not be achieved by conventional anti-corrosive treatment, and further to achieve good dispersibility. Accordingly, when the highly anti-corrosive thin platelet-like metal pigments are used as substrates of colored interference pigments, it is possible to achieve a dense and uniform coating layer, and to obtain colored interference pigments having metallic luster with a good dispersibility, since the pigments have a good affinity to the secondary hydrated metal oxide layer to be coated thereon due to their surface denseness. The resulting pigments have both inherent coloring of the metal due to the high reflectance from the surface of thin platelet-like metal substrates and good interference colors due to interference of the coated hydrated metal oxide layers, thereby resulting in a hue change (color travel effect) with varying viewing angle. Thus, novel colored interference pigments having metallic luster are achieved, whose coloration (chromaticity) is surprisingly improved.

Hereinafter, the present invention will be explained in more detail together with the preparing method.

The thin platelet-like metal substrates used in the present invention are so-called metallic pigments which contain thin platelet-like metals, namely aluminum flakes.

The thin platelet-like metal substrates used in the present invention preferably have an average particle diameter of 2-100 *µ*m and an average thickness of 0.05-5 *µ*m, more preferably they have an average particle diameter of 5-50 *µ*m and an average thicknessof 0.1-2 *µ*m, and even more preferably they have an average particle diameter of 5-30 *µ*m and an average thickness of 0.1-2 *µ*m.

The widely sold brilliant metallic aluminum flakes (from e.g. Silberline; Showa Aluminum Co., Ltd.; Toyo Aluminum Co., Ltd.; Asahi Kasei Metals Co., Ltd. ; Eckart-Werke; etc.) are commercially available in a stable supply.

Among these, thin platelet-like metal aluminum substrates commercially available in various states may be used, such as those substrates that have already been suspended in an organic solvent to prevent oxidative corrosion caused by the moisture contained in the air (e.g., pigment pastes suspended in mineral spirit, etc.), those substrates that, for the purpose of leafing or for improving dispersibility, have been treated with different types of surface treatment agents and have been suspended in an organic solvent, and those substrate on whose surface an oxidation protection film (passivation film, i.e. surface oxidized thin-film layer) has been applied beforehand. Regarding the object of the present invention, its effect is brought out particularly by aluminum metal flakes having high corrosiveness, as long as the surface is largely free from oxidation; hence the use thereof is preferred.

For example, those substrates with high corrosiveness such as aluminum flakes which are available in the market in the state of suspension in an organic solvent before being handled, and those substrates which have been treated with different surface treatment agents and have been suspended in an organic solvent are particularly recommended for use in the present invention.

When using thin platelet-like aluminum metal substrates which have been subjected beforehand to an anti-corrosive (passivation) treatment, there is no need to perform the above-mentioned treatment simply to confer corrosion resistance; however, apart from the purpose of the above-mentioned anti-corrosive treatments, the anti-corrosive layer is not only effective in improving the durability of the corrosion protection, but also effective for forming a smooth, uniform and dense layer of secondary hydrated metal oxides thereafter.

Next, a suspension is prepared with a polar organic solvent in which these thin platelet-like metal substrates are dispersed. The suspension of a polar organic solvent is defined as the material that can be prepared as follows:
(1) thin platelet-like aluminum metal substrates suspended in an organic solvent are suspended, as they are, in a polar organic solvent to obtain a suspension with the desired concentration;
(2) thin platelet-like aluminum metal substrates as solid parts (the flakes are not completely dried so that some adhering solvent remains to prevent direct contact with air and moisture) are retrieved beforehand by filtration and centrifugal separation of the organic solvent, and are then suspended in a polar organic solvent to obtain a suspension with the desired concentration;
(3) if the thin platelet-like aluminum metal substrates have already been treated with a surface treatment agent, the surface treatment agent is washed and removed using a polar organic solvent, and after filtration, the substrates are again suspended using a polar organic solvent to obtain a suspension with the desired concentration;
(4) if the thin platelet-like aluminum metal substrates are available in the market as the state of the powder which has been subjected to a passivation treatment, they are suspended, as they are, in a polar organic solvent to obtain a suspension with the desired concentration.

Examples of polar organic solvents used in the present invention include ketones such as acetone, methyl ethyl ketone (MEK), methyl isobutyl ketone (MIBK), etc. ; alcohols with an alkyl group having 1 to 10 carbon atoms; tetrahydrofuran (THF); dimethylformamide (DMF); dimethylsulfoxide (DMSO); dioxanes; glycols, polyols and ethers thereof, and cellosolves . Among these, alcohols which are in the liquid state at normal temperatures may be selected; examples of which include e.g. methanol, ethanol, propanol, isopropylalcohol, butanol, isobutanol, pentanol, hexanol, heptanol, octanol, isooctanol, nonanol, decanol and isomers thereof. Examples of preferred alcohols include ethanol, isopropylalcohol, butanol, isobutanol because they are inexpensive and easy to handle at normal temperature. Especially isopropylalcohol and ethanol etc. are used because of their low volatility and low cost. Examples of glycols and ethers thereof include ethylene glycol (EG), propylene glycol (PG), diethylene glycol (DEG), diethylene glycol monobutyl ether, propylene glycol monomethyl ether, propylene glycol monoethyl ether, dipropylene glycol monoethyl ether, etc. Moreover, these solvents may also be appropriately mixed.

Further, if metal alkoxide is used for forming the hydrated metal oxide coated layer, alcohols having a high compatibility with metal alkoxides are selected for the polar organic solvent used in the present invention. Naturally, an appropriate selection needs to be made also in consideration of the compatibility with the phosphoric acid compounds and boric acid compounds used. From an economic point of view it is desirable to use the same polar organic solvent for the treatment with phosphoric acid compounds and/or boric acid compounds (herein defined as the "first stage treatment") and for the hydrated tin oxide coating stage reaction; however, it is also possible to use different solvents for the respective treatment and coating stages when taking into consideration reaction efficacy and the compatibility with the reactants used at the respective reaction stages. Further, the polar organic solvent used for removing the surface treatment agents described in (3) above is appropriately selected in consideration of its compatibility with the surface treatment agent.

The concentration of the suspension of a polar solvent in which the thin platelet-like metal substrates have been suspended can be appropriately changed according to the density of those metal substrates used, the performance of the agitator and the viscosity of the solvent.

The highly anti-corrosive thin platelet-like metal pigments obtained have good anti-corrosive properties, good brilliance and good dispersibility with little particle agglomeration even in a strong alkali atmosphere.

In the present invention, either of the first stage treatment or the formation of hydrated tin oxide coated layer alone cannot achieve the objects of the present invention, which is to render corrosion resistance in strong alkali conditions and to obtain a uniform and dense coating of hydrated metal oxides by the wet process method performed thereafter.

Accordingly, the highly anti-corrosive thin platelet-like metal pigments may be constituted to have a first-stage treatment layer on the surface of thin platelet-like metal substrates and a coated layer containing hydrated tin oxide as the outermost layer, and also may be constituted to have another layer (2^{nd} step layer) between the first stage treatment layer and the hydrated tin oxide coated layer (3^{rd} step layer).

One embodiment of the highly anti-corrosive thin platelet-like metal pigments may be obtained by treating the surface of thin platelet-like metal substrates with phosphoric acid compounds and/or boric acid compounds (first stage treatment) and thereafter coating a hydrated tin oxide layer.

Further, another embodiment may be obtained by forming a hydrated metal oxide coated layer (second step layer) on the surface treated with the first stage treatment and further coating a hydrated tin oxide layer (third step layer) thereon.

Hereinafter, the first stage treatment will be explained.

The treatment with phosphoric acid compounds and/or boric acid compounds is performed by adding the phosphoric acid compounds and/or boric acid compounds to the suspension of a polar organic solvent in which thin platelet-like aluminum metal substrates have been suspended.

Taking into consideration good anti-corrosive property, dispersibility and economic factors, the amount of phosphoric acid compounds and/or boric acid compounds used is an amount corresponding to 0.0001g - 0.1g as P₂O₅ and/or B₂O₃ per unit area of the surface (m²) of thin platelet-like metal substrates, more preferably is an amount corresponding to 0.0002g - 0.08g and still more preferably is an amount corresponding to 0.0005g - 0.05g. Thus, the amount used for this treatment is naturally determined in view of the unit area of the surface of the thin platelet-like aluminum metal substrates; i.e. a small amount is required when the particle diameter is large, while a large amount is required if the particle diameter is small.

When using phosphoric acid compounds and boric acid compounds in an aqueous solution, it is preferred to determine the amount of water so as not to become excessive while taking into consideration the amount used (consumed) in subsequent processes and so that the surface roughness of the raw material of the thin platelet-like aluminum metal substrates does not increase. Further, it is also possible to use these solvents of phosphoric acid compounds and boric acid compounds with the water mentioned before dissolved together as one solvent with the polar organic solvents subsequently used for preparing the suspension of thin platelet-like aluminum metal substrates. In any case, the polar organic solvent used is appropriately selected while taking into consideration its affinity and compatibility with the thin platelet-like aluminum metal substrates and phosphoric acid compounds and boric acid compounds.

Examples of phosphoric acid compounds used in the present invention include phosphoric acid, orthophosphoric acid, metaphosphoric acid, tripolyphosphoric acid, hypophosphorous acid, phosphorous acid, various polyphosphoric acids thereof, various phosphates thereof having at least one OH group, organic acidic phosphoric acid esters (e.g., methyl acid phosphate, butyl acid phosphate, dibutyl acid phosphate, monobutyl acid phosphate, 2-ethylhexyl acid phosphate, bis-2-ethylhexyl acid phosphate, isodecyl acid phosphate, diisodecyl acid phosphate, etc.), organic acidic phosphorous acid esters (e.g., dibuthyl hydrogen phosphite etc.), 2-methacryloyloxyethyl acid phosphate, hydroxyethanediphosphonic acid {CH3C(OH) (PO₃H₂)₂}, phosphate bis[2-(N-propyl perfluorooctylsulfonyl amino)ethyl]ester, perfluoroalkylethyl phosphoric acid ester (e.g., (RfCH₂CH₂O)P(O)(OH)₂, (RfCH₂CH₂O)₂P(O)(OH), where Rf represents a perfluoroalkyl group of CF₃(CF₂)₆₋₁₇). The terms "acidic" and "acid" in the above-mentioned phosphoric acid compounds mean that such phosphoric acid compounds have at least one OH group. Further, by selecting an appropriate organic ester group as the bonded group of the phosphoric acid compounds, it is possible to increase the affinity with the polar organic solvent used in the subsequent reaction.

Examples of boric acid compounds used in the present invention include boric acid, boric acid ammonium, metaboric acid, metaboric acid lithium, metaboric acid ammonium, hypoboric acid, hypoboric acid ammonium, etc.

The treatment of the highly anti-corrosive thin platelet-like aluminum metal pigments can be performed by phosphoric acid compounds, by boric acid compounds or by both phosphoric acid and boric acid compounds, etc., as long as the object of the present invention is achieved.

After the treatment has been completed, when a hydrated tin oxide layer is formed on the surface of the thin platelet-like aluminum metal substrates obtained through the first stage treatment, the suspension can be used as it is or after retrieving the solid parts by filtration to move to the reaction forming a hydrated tin oxide layer.

Hereinafter, the reaction forming the hydrated tin oxide coated layer will be explained for the case in which the hydrated tin oxide layer is formed on the surface of the thin platelet-like metal substrates obtained through the first stage treatment.

Since the thin platelet-like metal substrates obtained through the first stage treatment do not have sufficient corrosion resistance, it is preferable to perform the coating of the hydrated tin oxide by sol-gel method in a polar organic solvent; particularly, a method using tin alkoxide as the tin compound to be hydrolyzed is preferred.

Specific examples of tin alkoxides used in the present invention include tin tetraethoxide, tin tetra-iso-propoxide, etc.

The suspension obtained by the first stage treatment can be used as it is, or as the solid parts retrieved by filtration, can again be dispersed in a polar organic solvent, which may be identical to or different from the one of the first stage treatment reaction, to prepare a suspension. The formation of a hydrated tin oxide coated layer, which requires the presence of a catalyst, is conducted by adding metal compounds and a predetermined amount of water necessary for hydrolysis . It is possible to use an acidic catalyst for hydrolysis; however, for forming a uniform and dense coated layer, a basic catalyst based on ammonium compounds and/or amino-compounds is preferred. The use of a basic catalyst is characteristic of the present invention.

Taking into consideration corrosion resistance and economic factors, the amount of metal alkoxide or other metal compounds used according to the present invention, calculated as metal oxide, is an amount corresponding to 0.01g - 1.0g per unit area of the surface (m²) of thin platelet-like metal substrates, even more preferably is an amount corresponding to 0.02g - 0.8g and still more preferably is an amount corresponding to 0.05g - 0.5g.

As the polar organic solvent used in the reaction for forming a hydrated tin oxide coated layer, alcohol constituting tin alkoxide is preferably used.

The ammonium compounds and/or amino compounds that are used as the basic catalyst in the reaction for forming a hydrated tin oxide coated layer not only can serve as a catalyst for hydrolyzing tin alkoxide by the sol-gel method, but also can affect the formation of a uniform and dense coated layer of the hydrated tin oxide.

Specific examples of ammonium compounds and/or amine compounds used in the present invention include e.g., as ammonium compound, ammonia, ammonium carbonate, ammonium hydrogen carbonate, ammoniumphosphate, ammonium formate, ammonium acetate, ammonium oxalate, ureas, etc.; and specific examples of amino compounds include, e.g. γ-aminopropyl triethoxy silicate, triethanolamine, diethanolamine, and their salts. Among these, γ-aminopropyl triethoxy silicates etc. combine in the same molecule the two functions of the above-mentioned silicon alkoxides and the amino component, hence they are appropriately selected to obtain the desired properties.

From the point of view of reaction rate, anti-corrosive property and the amount of hydrated metal oxide to be coated etc. , the amount of these basic catalysts, i.e. the ammonium and/or amino compounds is preferably an amount corresponding to 0.01-100 mol, and especially preferably an amount corresponding to 0.1-30 mol per 1 mol of tin alkoxide compound.

Any of the following methods may be adopted for adding water in said sol-gel method:
(1) adding the amount of water necessary for hydrolysis to the suspension obtained by the first stage treatment before adding a solution of tin alkoxide,
(2) adding water and tin alkoxide separately and at the same time to the suspension obtained by the first stage treatment, and
(3) adding tin alkoxide to the suspension obtained by the first stage treatment before adding water.

More precisely, the following methods may be adopted for the suspension after the first stage treatment:
a. adding a predetermined amount of water and a catalyst, then adding a separately prepared tin alkoxide solution dissolved in a polar organic solvent,
b. adding a separately prepared aqueous solution of a catalyst and a predetermined amount of water and a further separately prepared tin alkoxide solution dissolved in a polar organic solvent separately and at the same time, and
c. adding a predetermined amount of tin alkoxide before adding a catalyst and a predetermined amount of water provided separately.

Among these, when the speed of the hydrolysis reaction is high, the method in which water and the tin alkoxide solution are separately added at the same time is preferred in that a state of excessive water during the hydrolysis reaction can thus be avoided.

A high reaction temperature is preferred to increase the speed of the hydrolysis reaction; however, it is appropriately determined in consideration of the boiling point of the polar organic solvent used etc. When operating at a temperature in the vicinity of the boiling point, the solution can be cooled and refluxed by using a condenser etc.

Further, when forming another layer, for example, a hydrated metal oxide coated layer (second step layer) between the first stage treatment layer and the hydrated tin oxides coated layer, the coating of the hydrated tin oxide coated layer (third step layer) can be preferably performed by a wet process method.

When coating a hydrated metal oxide layer (second step layer) between the layer treated with phosphoric acid compounds and/or boric acid compounds (first stage treatment) and a layer containing hydrated tin oxide (3^{rd} step layer), it is possible to coat hydrated metal oxide containing one or more kinds of metals selected from the group consisting of silicon, aluminum, zirconium and titanium.

These hydrated metal oxides can be hydrated metal oxide consisting of one kind of metal, or composite hydrated metal oxides containing two or more kinds of metals; hydrated silicon oxide is particularly preferable in view of its high transparency, low reflectivity and low material cost.

Moreover, it is also possible to form multi-layers of hydrated metal oxide coated layers comprising one or more kinds of these hydrated metal oxides. Examples of raw materials for the metals used at this stage include metal alkoxides and organic acid salts of those metals.

Specific examples of silicon alkoxides used in the present invention include e.g. tetramethoxy silicate, tetraethoxy silicate, tetrapropoxy silicate, tetraisopropoxy silicate, tetrabutoxy silicate, tetrapentoxy silicate, tetrahexoxy silicate, so-called silane coupling agents (e.g., alkoxy silicate having an alkyl group, alkoxy silicate having an aminoalkyl group, alkoxy silicate having a glycidylalkyl group, etc.). Each of them may be used either solely or in combination. When using a silane coupling agent, a desired surface modification can be designed.

Specific examples of aluminum alkoxides include e.g. aluminum triethoxide, aluminum tri-iso-propoxide, aluminum tri-sec-butoxide, aluminum ethylacetate di-iso-propoxide, etc.

Specific examples of zirconium alkoxides include e.g. zirconium tetraethoxide, zirconium tetra-n-propoxide, zirconium tetra-iso-propoxide, zirconium tetra-n-butoxide, etc.

Specific examples of titanium alkoxides include titanium tetraethoxide, titanium tetra-n-propoxide, titanium tetra-iso-propoxide, titanium tetra-n-butoxide, etc.

The coating of the hydrated metal oxides may be formed by the above-described coating method of hydrated tin oxide, namely the sol-gel method in a polar organic solvent. The amount of metal compound to form such hydrated metal oxide coated layer (second step layer) is an amount corresponding to 0.01g - 1.0g, more preferably 0.02g - 0.8g, and most preferably 0.05g - 0.5g as metal oxide per unit area of the surface (m²) of the thin platelet-like metal substrates.

The combination of the first stage treatment and the kind of hydrated metal oxide forming the hydrated metal oxide coated layer (second step layer) are determined in consideration of the transparency of the highly anti-corrosive thin platelet-like metal pigments to be obtained, the amount of light reaching to the thin platelet-like metal substrates beneath the treatment layers, the amount of reflected light depending thereon, the desired coloring properties, etc.; among those it is preferred to form a hydrated silicon oxide coated layer (second step layer) generated by hydrolyzing silicon alkoxide on the surface of thin platelet-like metal substrates subjected to the first stage treatment .

Next, hydrated tin oxide coated layer (third step layer) will be described for the case in which the surface of the thin platelet-like metal substrates is coated with a hydrated metal oxide layer (second step layer) by the sol-gel method after being subjected to the first stage treatment , and further the outer layer thereof is coated with a layer (third step layer) containing hydrated tin oxide.

In the present invention, though the hydrated tin oxide coated layer (third step layer) can be formed by vapor phase method or the sol-gel method, it is more preferable to adopt a wet process method which has less restrictions on the raw material and production facilities compared with the vapor phase method and the sol-gel method, and which is easy to obtain a uniform coated layer, and to operate due to its simple process with a wide range of applications.

The temperature is kept at 60 to 90 degrees C for ease of controlling the uniform coated layer, and a tin salt aqueous solution and a basic aqueous solution are simultaneously added to the suspension while keeping the pH constant, thereby coating the hydrated tin oxide layer (third step layer) onto highly anti-corrosive metal substrate. The pH is preferably below 3.0. And more preferably the value of 1.0 to 2.5 is adopted.

The amount of hydrated tin oxide coating for the above-mentioned surface after the first stage treatment or after the first stage treatment followed by the second layer coating needs to be a sufficient amount not to cause the underlying base (the layer treated in non-aqueous system) to be exposed. That is, the amount must be over the amount to be necessary to form a monolayer. In this case, the amount of hydrated tin oxide per unit area of the surface (m²) of thinplatelet-like metal substrates is appropriately not less than 0.0008g as SnO₂.

Specifically, the amount of hydrated tin oxides used needs to be adjusted appropriately according to the kind, particle size, particle size distribution of the thin platelet-like metal substrates. Of course, the amount is decreased when the particle size is large, and on the contrary it is necessary to increase the amount when the particle size is small.

Considering the sufficient corrosion resistance in strong alkali conditions, the sufficient adhesion and the improvement of denseness of the secondary hydrated metal oxide layer described below, and control of the hue of the interference color, the amount of hydrated tin oxide is adjusted to be 0.0008g - 1.0g, more preferably 0.0009g - 0.9g, and most preferably 0.001g - 0.8g as tin oxide (SnO₂) per unit area of the surface (m²) of the thin platelet-like metal substrates. For example, when using highly anti-corrosive substrates using the metal aluminum as the thin platelet-like metal (specific surface area is 3.01 m²/g (described in Table 3 in JP, A, 2003-411150)), an appropriate amount is 0.001g - 0.8g per unit area (m²) of the thinplatelet-like metal substrates.

The tin salt aqueous solution used is water soluble tin (II) salt or tin (IV) salt. For example, tin(II) salt, tin(IV) chloride, tin(II) sulfate, tin(II) acetate, tin(II) oxalate, etc. are preferred.

The term "hydrated tin oxide", as used in the present specification, denotes compounds in which tin oxides, hydrates of tin oxides and hydroxyl group bonded tin oxides and other bonded states are present as an inclusive whole. Similarly, the term "hydrated metal oxide", as used in the present specification including the claims, denotes compounds which are obtained by drying and, if desired, calcining hydrolyzed metal salts and metal compounds such as metal alkoxide etc., and compounds in which metal oxides, hydrates of metal oxides and hydroxyl group bonded metal oxides and other bonded states are present as an inclusive whole.

The highly anti-corrosive thin platelet-metal pigments have high corrosion resistance and generate almost no hydrogen gas even in a NaOH aqueous solution of pH 11 which is a strong alkali condition.

The highly anti-corrosive thin platelet-like metal pigments can be mainly used as pigments having metallic luster particularly having brilliance, for paints, inks, plastics, etc. Since they can be used in an aqueous system or a powder system, they are particularly preferred, from the environmental point of view and for improving the work environment, and as water-borne paints and inks including in alkaline conditions and as powder coatings. These highly anti-corrosive thin platelet-like metal pigments, depending on their intended use, can be used to carry out e.g. treatments to light resistance, water and weather resistance required for applications as automobile paints (e.g. according to JP, A, 63-130673, JP, A, 01-292067, etc.), e.g. treatments for high plane orientation properties (leafing) required in the painting and printing fields (e.g. according to JP, A, 2001-106937, Japanese Patent Application No.11-347084, etc.), water-borne treatments for water-based paints or inks (e.g. according to JP, A, 08-283604, etc.), silicon treatment for improving dispersibility and hydrogenpolysiloxane treatment for improving the hydrophobic and oil phobic properties for applications in the cosmetics field, surface treatments for weld-line prevention when used as resin (e.g. according to JP,A, 03-100068), and various treatments for improving dispersibility.

The highly anti-corrosive thin platelet-like metal pigments are indispensable for and required as base for the novel colored interference pigments having metallic luster according to the present invention described below; and the treatment with phosphoric acid compounds and/or boric acid compounds, and coating treatment of hydrated tin oxide are not merely for imparting high anti-corrosion property to the surface of the thin platelet-like metal substrates, they are also important for achieving a dense and uniform hydrated metal oxide layer subsequently formed on the upper layer thereof. Namely, only by forming the highly anti-corrosive layer obtained by the treatments described above it is possible to pass to the subsequent hydrated metal oxide coating process by the wet process method and to easily coat secondary hydrated metal oxide on the upper layer of the anti-corrosive layer.

Hereinafter, the colored interference pigments having metallic luster of the present invention which are based on the highly anti-corrosive thin platelet-like aluminum metal pigments and which are obtained by further coating a secondary hydrated metal oxide layer comprising one or more layers are described. In the present invention, the secondary hydrated metal oxide layer coating on the surface of the anti-corrosive thin platelet-like metal can also be formed by the vapor phase method (chemical vapor deposition (CVD) and physical vapor deposition (PVD)) or the sol-gel method; however, it is preferred to use the wet process method which, in contrast to the vapor phase and sol-gel methods, has no limitations with regard to the raw material and production facilities and which is an easy to operate simple process with a wide range of applications.

It is a major characteristic of the present invention that at this stage the so-called wet process method can be adopted because of the excellent anti-corrosive properties.

Metals constituting the secondary hydrated metal oxide layer for generating interference colors, include not only titanium, aluminum, zirconium, tin, zinc, chromium and cobalt, also include silicon, boron, etc. Hydrated metal oxides of titanium, zirconium, tin, zinc, silicon, boron, etc. having transparency and hydrated metal oxides of chromium, cobalt, etc. having a colored transparency are appropriately selected for use. Among these, titanium is preferred in consideration of its high refractive index.

The colored interference pigments having metallic luster of the present invention can be obtained by using water-soluble metal salts with the wet-process method on their own or a composite coating in combination (i.e. as hydrated composite metal oxides), in multi-layer coating of which each layer is of different kind of material or in multi-layer coating in which a hydrated metal oxide layer with a high refractive index (representative of this type are e.g. hydrated titanium oxides, hydrated zirconium oxides, etc.) alternates with hydrated metal oxide layers with a low refractive index (e.g. hydrated aluminum oxides, hydrated silicon oxides, hydrated boron oxides, etc.), etc.

Though the wet process method, as used in the present invention, has been described before, more precisely, the method consists of, in an aqueous system and
(1) In the case of neutralization hydrolysis, selecting the desired water-soluble metal salt (e.g., nitrate salt, sulfate salt, chloride, acetate salt, etc.) to prepare a predetermined amount of aqueous solution, while separately preparing an alkaline solution, dropping these into a suspension of highly anti-corrosive thin platelet-like metal pigments, which is the base obtained beforehand, while maintaining a predetermined pH, to form a hydrolyzed layer and, thereafter, washing, filtering, drying and, if desired, calcining it;
(2) In the case of thermal hydrolysis, adding a predetermined amount of the desired water-soluble metal salt to a suspension of highly anti-corrosive thin platelet-like metal pigments which is the base obtained beforehand, heating the mixture to form a hydrolyzed layer, and thereafter washing, filtering, drying and, if desired, calcining it.

Moreover, as a variation of the method by neutralization hydrolysis (1), a method using, instead of the alkaline aqueous solution, acetoamide and urea which produce alkalinity through heating (the so-called "homogeneous precipitation method") can also be mentioned. Thus, the colored interference pigments having metallic luster, which are the object of the present invention, can be obtained by selecting optionally water-soluble metal salts, using them either solely or in combination and by changing the time at which they are introduced to the suspension.

More specifically, the colored interference pigments having metallic luster of the present invention can be prepared: in the case of a single-layer coating of hydrated metal oxide, by selecting one water-soluble metal salt such as titanium, zirconium, tin, zinc, chromium, cobalt, etc. , for coating the hydrated metal oxide by means of neutralization hydrolysis under alkaline conditions or by thermal hydrolysis; in the case of a coating of composite metals, by mixing plural metal salts for coating the hydrated composite metal oxides by neutralization hydrolysis or by thermal hydrolysis; or, in the case of a multi-layer coating, by sequentially adding the different metal salts for coating sequential layers of hydrated metal oxides; and by, thereafter, washing, filtering, drying and, if desired, calcining them. When forming, according to the present invention, a multi-layer coating with alternate layers, aqueous solutions of metal salts, which are to form the relatively high refractive index layers (mentioned before) and low refractive index layers (mentioned before), are alternately dropped, in the same way, into the base, i.e. the suspension of highly anti-corrosive thin platelet-like metal pigments, thereby sequentially coating the hydrolates thereof. The color chromaticity of the colored interference pigments having metallic luster obtained by forming an alternate multi-layer coating is improved through the accumulation of interferences when the reflection/transmission of light at the boundary of each layer is repeated by the alternate coating of plural layers alternately controlling the optical thickness (for details refer to WO 98/53011). The colored interference pigments having metallic luster obtained by forming an alternate multi-layer coating have a high chromaticity which cannot be obtained by single hydrated metal oxide coating having high refractive index using single metal.

In the present invention, if hydrated titanium oxides are included in the constituent elements of the interference color layer, it is possible to change them to rutile-type by using a tin compound or other rutile crystalizing agents for increasing the refractive index of the hydrated titanium oxide crystals. The coloring properties are improved by the change to a rutile-type titanium oxide.

The colored interference pigments having metallic luster obtained by the present invention produce the so-called color travel effect (characterized in that the observed colors vary with the viewing angle), combining the inherent color of the metal (masstone) and the interference colors, because the anti-corrosive layer is uniform and dense and the hydrated metal oxides having a high refractive index coated on the surface thereof have a high uniformness and denseness.

In these interference color layers, known colored or blackish inorganic and organic pigments of ultrafine particles can be included to produce colored interference pigments having metallic luster holding the inherent colors (masstones) of these pigments while generating interference colors. This has only become possible by adapting the wet process method to be operated easily, which makes it possible to extend these pigments to various color ranges and to broaden the range of applications.

By using the method according to JP, A, 62-101662, JP, A, 62-101664, and JP, A, 05-214257, fine-grained (organic and inorganic) pigments and/or dye particles consisting of particles can be applied to be coated onto the surfaces of the highly corrosion resistant thin platelet-like metal pigments and the colored interference pigments having metallic luster according to the present invention thereby providing pigments which are uniformly and firmly coated. The organic pigments to be used in these methods include azolake pigments, phthalocyanine pigments, indigo pigments, perylene pigments, quinophthalone pigments , dioxazine pigments, quinacridon pigments, iso-indolinone, and metal complex pigments; the inorganic pigments include chrome yellow, yellow iron oxide, iron red, titanium dioxide, carbon black, Prussian blue, and ultramarine blue.

The surfaces of the colored interference pigments having metallic luster according to the present invention may be coated with a metal layer through reduction of inorganic or organic metallic compounds by a known wet chemical process. Further, it is possible to precipitate a metal layer by a CVD (Chemical Vapor Deposition) method such as gas phase decomposition of metal carbonyl or a PVD (Physical Vapor Deposition) method such as sputtering or vapor deposition of metal. For the metal layer, preferable metals have particularly strong reflex performances. Such preferable metals include aluminum, titanium, chromium, nickel, silver, zinc, molybdenum, tantalum, tungsten, palladium, copper, gold, platinum, and alloys thereof such as hastelloy. Especially preferable are aluminum and silver. The thickness of the metal layer is set to be within a range to remain translucent, that is 2 to 100 nm, and more preferably 5 to 50 nm.

By performing different types of additional surface treatments, the colored interference pigments having metallic luster obtained according to the present invention meet with the quality required for the applications for which these treatments are used. For example, it is possible to carry out treatments for light resistance, water resistance and weather resistance required for applications as automobile paints (e.g. according to JP, A, 63-130673, JP, A, 01-292067, etc.), e.g. treatments to impart high plural orientation properties (leafing) required in the painting and printing fields (e.g. according to JP,A, 2001-106937, Japanese Patent Application No.11-347084, etc.), water-borne treatments for water-borne paints or inks (e.g. according to JP, A, 08-283604, etc.), silicon treatment for improving dispersibility and hydrogenpolysiloxane treatment for improving hydrophobic and oil phobic properties for applications in the cosmetics field, surface treatments for weld-line prevention when used as resin (e.g. according to JP,A, 03-100068), and different treatments for improving dispersibility.

Hereinafter, the uses of the colored interference pigments having metallic luster according to the present invention will be described. The colored interference pigments having metallic luster obtained according to the present invention can be used in various applications such as paints, printing inks, ink for writing implement, resin compositions, laser marking, artificial marble, cosmetics, etc. Specific examples thereof will be given below. Although not particularly described, colored interference pigments having metallic luster according to the present invention used in the following examples include the above-mentioned pigments and the products prepared therefrom by performing the above-mentioned various treatments.

### Use for paints

Examples of use in paints are those of organic solvent-type paints, NAD paints, water-borne paints, emulsion paints, colloidal paints and powder coating. The pigments of the present invention can be mixed in a proportion of 1-100 weight parts to 100 weight parts of the paint resins as solid parts . A proportion of 1-70 weight parts is preferred. A proportion of 1-20 weight parts is particularly preferable. For improving the dispersibility, the surface of the pigments in the present invention can be treated with a silane coupling agents and a titanium coupling agents. Examples of resin components for the paints in the present invention are acrylate resins, alkyd resins, unsaturated polyester resins, amino resins, melamine resins, polyurethane resins, epoxy resins, polyamide resins, phenol resins, cellulose resins, vinyl resins, silicone resins, fluorine resins, etc. These resins may be used alone or in combination of two or more.

In water-borne paint, resin of an emulsion type containing cross-linking resin by acrylate melamine resins, etc. may be exemplified.

The pigments of the present invention can be used in paints, especially in combination with one or more further pigments, selected from the group consisting of organic pigments, inorganic pigments, effect pigments, fillers, and functional pigments. Examples of mixtures and admixtures include combination pigments as described below, organic pigments, inorganic pigments, dripping preventers, viscosity adjusting agents, sedimentation preventers, cross-linking promoters, curing agents, leveling agents, defoaming agents, plasticizers, antiseptic agents, antifungal agents, ultraviolet stabilizers, fillers, etc. Examples of combination pigments are titanium dioxide, calcium carbonate, clay, talc, barium sulfate, white carbon, chromium oxide, zinc oxide, zinc sulfide, zinc powder, metal powder pigments (such as., aluminum flakes, colored aluminum flakes, stainless steel flakes, titanium flakes, etc.), iron black, yellow iron oxide, red iron oxide, chrome yellow, carbon black, molybdate orange, Prussian Blue, ultramarine blue, cadmium type pigments, fluorescent pigments, soluble azo dyes, insoluble azo dye, condensed azo dye, phthalocyanine pigments, condensed polycyclic pigments, composite oxide pigments, graphite, mica (e.g., white mica, phlogopite, synthetic mica, fluorine tetra silicon mica, etc.), metal oxide coated mica (such as, titanium oxide coated mica, titanium dioxide coated mica, (hydrated) iron oxide coated mica, mica coated with iron oxides and titanium oxides, mica coated with lower ordered titanium oxides), metal oxide coated graphite (e.g., titanium dioxide coated graphite, etc.), thin platelet-like alumina, metal oxide coated thin platelet-like alumina (e.g., titanium dioxide coated thin platelet-like alumina, iron oxide coated thin platelet-like alumina, Fe₂O₃ coated thin platelet-like alumina, Fe₃O₄ coated thin platelet-like alumina, interference color metal oxide coated thin platelet-like alumina, etc.), MIO (micaceous iron oxide), metal oxide coated MIO, metal oxide coated silica flakes, metal oxide coated alumina, metal oxide coated glass flakes called as optical effect pigments, photochromic pigments, thermochromic pigments, holographic pigments called as functional pigments, etc. By combining these and other pigments, novel hue is produced and chromaticity can be improved. These paints can be applied to wood, plastic, metal sheets, glass, ceramic, paper, film, sheeting, translucent films of reflector for LCDs, etc. Examples of uses for paints include automobiles, buildings, marine vessels, electric household appliances, canned goods, industrial equipment, traffic signs, plastics, household goods, etc.

Examples of the structure of the coated film exemplified e.g. a film coated in the order of a base coat layer, middle coat layer, layer containing the pigments of the present invention and clear layer, and a structure in the order of base coat layer, middle coat layer comprising the pigments of the present invention and clear layer, etc.; however, the structure of the coated film is not limited thereto.

Examples of the method for forming the coated film include one-coat/one-bake, two-coat/one-bake, two-coat/two-bake, three-coat/one-bake, three-coat/two-bake, three-coat/three-bake. Examples of coating methods include electrostatic coating, spray coating, airless coating, roll coating, dipping coating, etc.

### Use for Inks and Printing Inks

The pigments of the present invention can be used in inks and printing inks, especially in combination with further pigments, selected from the group consisting of organic pigments, inorganic pigments, effect pigments, fillers, and functional pigments. Examples of use in inks and printing inks include relief printing ink, lithographic printing ink, intaglio printing ink, ink for metal plates, radiation curable ink, UV ink, EB ink, flexo ink, screen ink, offset ink, gravure ink, etc. and water-borne ink thereof, etc. The pigments of the present invention can be mixed in a proportion of 1-100 weight parts to 100 weight parts of the resins as solid parts in the ink. A proportion of 1-70 weight parts is preferred. And a proportion of 1-20 weight parts is particularly preferred. Moreover, the surface of the pigments in the present invention can be treated with silane coupling agents and titanium coupling agents, etc. Examples of resin components include e.g. rosin maleic resins, maleic resins, alkyd resins, polyamide resins, phenol resins, petroleum resins, urethane resins, epoxy resins, acrylate resins, butyral resins, melamine resins, epoxy resins, vinyl chloride resins, vinylidene chloride resins, cellulose resins, vinyl resins, unsaturated polyester resins, cellulose resins, etc. These resins may be used alone or in combination of two or more.

Examples of mixtures and admixtures include combination pigments as described below, organic pigments, inorganic pigments and additives such as varnishes, reducers, compounders, ultra varnishes, gelling agents, drying promoters, antioxidants, preventers for transmission of ink to back, lubricants, surface active agents, etc. Further examples include dripping preventors, viscosity adjusting agents, sedimentation preventors, cross-linking agents, curing agents, leveling agents, defoaming agents, plasticizers, antiseptic agents, antifungal agents, ultraviolet stabilizers, fillers, etc.

Examples of combination pigments include extender pigments; precipitated barium sulfate; precipitated calcium carbonate; alumina white; magnesium carbonate and white carbon; white pigments such as titanium oxide, zinc oxide, etc. ; black pigments such as carbon black; yellow pigments such as chrome yellow, disazo yellow, Hansa yellow; red pigments such as brilliant carmine 6B, lake red C, permanent red F5R, Rhodamine Lake, etc. ; blue pigments such as phthalocyanine blue, Victoria Blue Lake, Prussian Blue; orange pigments such as chrome vermilion, disazo orange; green pigments such as phthalocyanine green, etc.; violet pigments such as methyl violet lake, dioxazine violet, etc.; other pigments such as isoindolinone, benzimidazoline, condensed azo, quinacdrine, etc. ; composite oxide pigments; graphite; mica (e.g. , white mica, phlogopite , synthetic mica, fluorine tetravalent silicon mica, etc.); metal oxide coated mica (e.g., titanium oxide coated mica, titanium dioxide coated mica, (hydrated) iron oxide coated mica, mica coated with iron oxides and titanium oxides, mica coated with lower order titanium oxides) ; metal oxide coated graphite (e.g., titanium dioxide coated graphite, etc.); thin platelet-like alumina; metal oxide coated thin platelet-like alumina (e.g., titanium dioxide coated thinplatelet-like alumina, iron oxide coated thin platelet-like alumina, Fe₂O₃ coated thin platelet-like alumina, Fe₃O₄ coated thin platelet-like alumina, interference color metal oxide coated thin platelet-like alumina, etc.); MIO; metal oxide coated MIO; metal oxide coated silica flakes; metal oxide coated glass flakes called as optical effect pigments; photochromic pigments; thermochromic pigments; holographic pigments called as functional pigments; etc. These inks can be printed on wood, plastic, metal sheet, glass, ceramic, paper, corrugated cardboard, film, sheet, canned goods, translucent films of reflection for LCDs, etc. When the pigments of the present invention are combined with these pigments, new hue and colors can be found. Especially the pigments according to the present invention are suitable for preventing the counterfeiting of securities, tickets, travel coupons, passenger tickets, etc., due to their color travel effect (hue changes associated with the viewing angle) . Thus, they are advantageously useful in security printing inks and printed matters.

Moreover, when used in printing inks, it is particularly preferred to perform a highplane orientation treatment (mentioned above) on the colored interference pigments having metallic luster obtained according to the present invention. Pigments subjected to such a surface treatment can be mixed with various kinds of printing inks and used for offset printing, gravure printing, screen printing, ultraviolet cure printing, and relief and lithographic printing. The use of pigments which have been subject to a high plane orientation treatment in inks particularly improves the coloration of interference color on printed surfaces thereby effecting the color travel effect associated with the viewing angle, which is preferable for anti-counterfeiting printing.

### Use for Plastics

The pigments of the present invention can be used inplastics, especially in combination with further pigments, selected from the group consisting of organic pigments, inorganic pigments, effect pigments, fillers, and functional pigments.

In the present invention, when incorporated in plastics, the pigments can be mixed with the resin either directly or after previously making into pellets and then making into various molded products by means of extrusion molding, calender molding, blow molding, etc. As to the resin component, polyolefin-based thermoplastic resins as well as epoxy-based, polyester-based and polyamide (nylon) -based thermosetting resins can be used. A small amount of pigments can be sufficient to effectively produce the color effects of the colored interference pigments with metallic luster of the present invention, e.g., when forming a multiple-layer plastic bottle, the external appearance of the bottle can be made to appear effectively by incorporating the pigments in the resin of the outer layer. Especially pigments obtained according to the present invention on which an additional orientation plane treatment has been performed are preferred in that they have good coloring properties. Naturally, it is possible to use colored metallic luster interference pigments related to the present invention on which a weld-line prevention treatment (e.g., encapsulation, etc.) has been performed. The colored interference pigments having metallic luster obtained according to the present invention can also be used in combination with other pigments. Examples of pigments that can be used in combination with the pigments of the present invention include titanium dioxide, calcium carbonate, clay, talc, barium sulfate, white carbon, chromium oxide, zinc oxide, zinc sulfide, zinc powder, metal powder pigments, iron black, yellow iron oxide, red iron oxide, chrome yellow, carbon black, molybdate orange, Prussian Blue, ultramarine Blue, cadmium type pigments, fluorescent pigments, soluble azo dyes, insoluble azo dyes, condensed azo dyes, phthalocyanine pigments, condensed polycyclic pigments, composite oxide pigments, graphite, mica (e.g., white mica, phlogopite, synthetic mica, fluorine tetravalent silicon mica, etc.), metal oxide coated mica (such as, titanium oxide coated mica, titanium dioxide coated mica, (hydrated) iron oxide coated mica, mica coated with iron oxides and titanium oxides, mica coated with lower ordered titanium oxides), metal oxide coated graphite (e.g., titanium dioxide coated graphite, etc.), thin platelet-like alumina, metal oxide coated thin platelet-like alumina (e.g., titanium dioxide coated thin platelet-like alumina, iron oxide coated thin platelet-like alumina, Fe₂O₃ coated thin platelet-like alumina, Fe₃O₄ coated thin platelet-like alumina, interference color metal oxide coated thin platelet-like alumina, etc.), MIO, metal oxide coated MIO, metal oxide coated silica flakes, metal oxide coated glass flakes called as optical effect pigments, photochromic pigments, thermochromic pigments, holographic pigments called as functional pigments, etc.

### Use for Cosmetics

The pigments of the present invention can be used in cosmetics, especially in combination with further pigments selected from the group consisting of organic pigments, inorganic pigments, effect pigments, fillers, and functional pigments.

Examples of use in cosmetics include make-up, hair care products, cosmetic packs, etc. For example, the pigments can be used in gel, lipstick, foundation (including emulsion, liquid, oil-type emulsions, etc.), cheek rouge, mascara, nail enamel, eyebrow pencil, eye shadow, eyeliner, hair products, etc. They can be used in a proportion of 1-90 wt%. For example, 1-50 wt% for foundations, 1-80 wt% for eye shadow, 1-40 wt% for lipstick, 0.1-20 wt% for nail enamel can be mentioned.

Examples of mixtures and admixtures will be given below. Examples of pigments which may be used in combination with the pigments of the present invention include titanium dioxide, calcium carbonate, clay, talc, barium sulfate, white carbon, chromiumoxide, zinc oxide, zinc sulfide, zincpowder, metal powder pigments, iron black, yellow iron oxide, red iron oxide, chrome yellow, carbon black, molybdate orange, Prussian Blue, ultramarine blue, cadmium type pigments, fluorescent pigments, soluble azo dyes, insoluble azo dyes, condensed azo dyes, phthalocyanine pigments, condensed polycyclic pigments, composite oxide pigments, graphite, mica (e.g., white mica, gold mica, synthetic mica, fluorine tetravalent silicon mica, etc.), metal oxide coatedmica (e.g., titanium oxide coated mica, titanium dioxide coated mica, (hydrated) ironoxide coatedmica, mica coated with iron oxides and titanium oxides, mica coated with lower ordered titanium oxides), metal oxide coated graphite (e.g., titanium dioxide coated graphite, etc.), thin platelet-like alumina, metal oxide coated thin platelet-like alumina (e.g. , titanium dioxide coated thin platelet-like alumina, iron oxide coated thin platelet-like alumina, Fe₂O₃ coated thin platelet-like alumina, Fe₃O₄ coated thin platelet-like alumina, interference color metal oxide coated thin platelet-like alumina, etc.), MIO, metal oxide coated MIO, metal oxide coated silica flakes, metal oxide coated glass flakes called as optical effect pigments, photochromic pigments, thermochromic pigments, holographic pigments called as functional pigments, sericite, magnesium carbonate, silica, zeolite, hydroxyapatite, chromium oxide, cobalt titanate, glass beads, nylon beads, silicone beads, etc.

Examples of organic pigments include red nos. 2, 3, 102, 104, 105, 106, 201, 202, 203, 204, 205, 206, 207, 208, 213, 214, 215, 218, 219, 220, 221, 223, 225, 226, 227, 228, 230-1, 230-2, 231, 232, 405; yellow nos. 4, 5, 201, 202-1, 202-2, 203, 204, 205, 401, 402, 403, 404, 405, 406, 407; green nos. 3, 201, 202, 204, 205, 401, 402; blue nos. 1, 2, 201, 202, 203, 204, 205, 403, 404; orange nos. 201, 203, 204, 205, 206, 207, 401,402, 403; brown no. 201; violet nos. 201, 401; and black no. 401.

Examples of natural colors include salol yellow, carmine, β-carotin, hibiscus color, capsaicin, carminic acid, laccaic acid, gurcumin, riboflavin, shikonin, etc.

Further, examples of other components include fats and oils, waxes, surfactants, oxidation inhibitors, UV absorbers, vitamins, hormones, squalanes, liquid paraffins, palmitic acids, stearic acids, bees wax, hydrocarbons of myristyl myristate etc. , acetone, toluene, butyl acetate, organic solvents of acetic esters etc., antioxidants, antiseptic agents, polyhydric alcohols, perfumes, etc. By combining the pigments of the present invention with these pigments and components, novel effect colors and functions can be found.

When used in cosmetics, the pigments according to the present invention can be used e.g. in any of compact cakes, cream, lipstick, etc. ; however, they are particularly effective when used in make-up in which colors are particularly important. Naturally, it is possible to use colored interference pigments having metallic luster related to the present invent ion on which a surface treatment (mentioned before) has been performed.

### Other Uses

The pigments of the present invent ion can be used by combining with color toners for copying machines etc. For example, when it is used as s color toner for copying machines, a color travel effect is achieved thereby an effect of anti-counterfeiting can be achieved.

Hereinafter, the present invention will be described in more detail with reference to an example and comparative example, which, however, are not intended to limit the present invention.

### (Example 1)

### Preparation of the highly anti-corrosive thin platelet-like metal pigments (SnO_{2/}[SiO₂/Al(P)])

100 g of thin platelet-like metal substrate having the layer with anti-corrosive treatment ([SiO₂/Al(P)] obtained according to example 4-b inparagraph [0061] of JP,A, 2003-41150, the specific surface area : 3.01 m²/g) were suspended in 2 liters of water. The suspension was heated to 75°C under stirring. 372 ml of SnCl₄5H₂O solution (concentration of 50g/l) were dropped into the suspension while keeping the pH at 1.8 using a 32 wt% aqueous solution of sodium hydroxide. Thereafter, the solid parts filtered from the suspension were washed and dried to obtain highly anti-corrosive thin platelet-like metal pigments (SnO₂/[SiO₂/Al(P)]). The amount of coating of hydrated tin oxide was an amount corresponding to 0.036 g as tin oxide (SnO₂) per unit area of the surface m² of the thin platelet-like metal substrate(Al) .

### (Comparative example 1)

### Preparation of thin platelet-like metal like pigments [SiO₂/Al(P)]

The thin platelet-like metal pigments [SiO_{2/}Al(P)] was obtained by the same procedures as in example 1 except that the process of forming the hydrated tin oxide layer by means of SnCl₄5H₂O was omitted.

### Alkali resistance test (measurement of the amount of hydrogen gas generated)

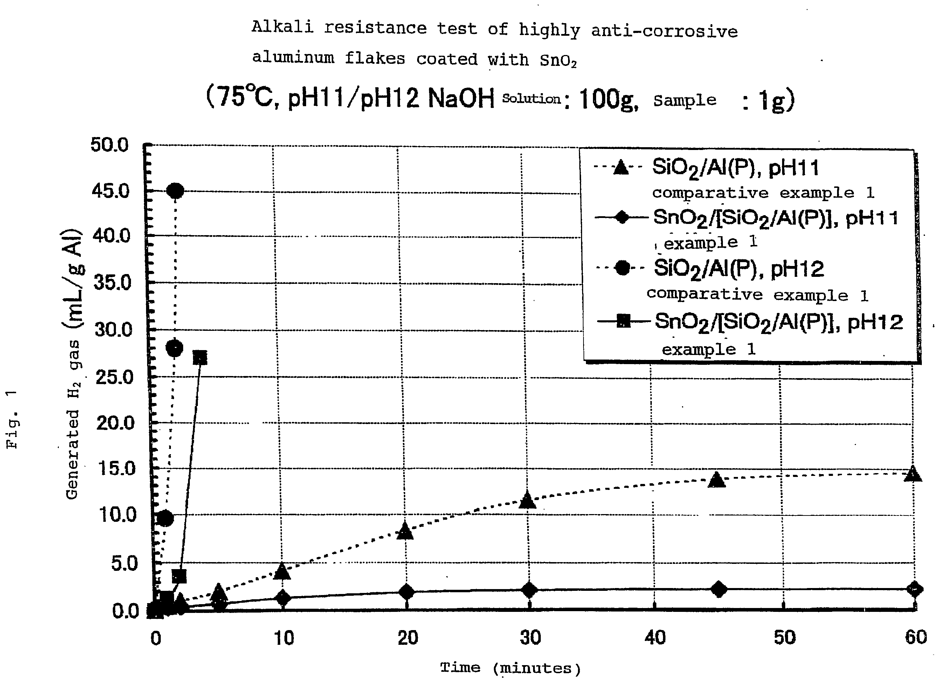

1 g of each sample was dispersed into warm water adjusted to be pH 11 and 12 by means of sodium hydroxide (NaOH), and the dispersion was kept at a constant temperature of 75 °C. The amount of hydrogen gas (H₂) generated by the dispersion was measured after a predetermined period of time. The measurement was conducted for 60 minutes. The results are shown in Fig. 1.

Fig. 1 shows the hydrogen gas generated when (SnO₂/[SiO₂/Al(P)]) was used. The highly anti-corrosive thin platelet-like metal pigments (SnO₂/[SiO₂/Al(P)]) showed almost no hydrogen gas generated in a solution of pH 11. In the case of [SiO₂/Al(P)] of which SnO₂ layer was omitted, a larger amount of hydrogen gas was generated in a solution of pH 11.

In a solution of pH 12, both of the example and the comparative example generated a large amount of hydrogen gas in a short period of time; however, (SnO₂/[SiO₂/Al (P)]) showed a smaller amount of hydrogen gas than [SiO₂/Al(P)]. Thus, it was demonstrated that (SnO₂/[SiO₂/Al(P)]) exhibited higher alkali resistance than [SiO₂/Al(P)] in which SnO₂ layer was omitted.

### (Example 2)

### Preparation of colored interference pigments having metallic luster (TiO₂/SnO₂/[SiO₂/Al(P)])

50 g of the highly corrosion resistant thin platelet-like metal pigments (SnO₂/[SiO₂/Al(P)]) obtained from the example 1 was suspended in one liter of water. The suspension was heated to 75°C under stirring. Thereafter, the pH was adjusted to be 1.8 using hydrochloric acid/sodium hydroxide aqueous solution. Then, titanium tetrachloride solution (TiCl₄, concentration: 448 g/litter) was dropped into the suspension until desired hue was achieved while keeping the pH at 1.8 using 32 % by weight sodium hydroxide aqueous solution, completing the reaction at a hue of green. The mixture was further filtered to remove solid parts, washed, dried, and calcined (at 350°C for 30 minutes) to obtain colored interference pigments having metallic luster with greenish color (TiO₂/SnO₂/[SiO₂/Al(P)]).

### [Industrial Applicability]

The highly anti-corrosive metal pigments can be widely used in water-borne paints of environment protection type over a wide range of pH. Moreover, the present invention enables the coating of hydrated metal oxides by a wet process method which was conventionally considered to be inadequate for metal substrates.[Brief Description of Drawings]

Fig. 1 shows the result of alkali resistance test of highly anti-corrosive aluminum flakes coated with SnO₂.

## Claims

1. Colored interference pigments having metallic luster, **characterized in that** the surface of highly anti-corrosive thin platelet-like metal pigments,
- wherein the highly anti-corrosive thin platelet-like metal pigments comprise: on the surface of thin platelet-like metal substrates,
- a layer formed by treating said surface with phosphoric acid compounds and/or boric acid compounds; and
- a layer containing hydrated tin oxide as an outermost layer,
- wherein the thin platelet-like metal substrates are metallic pigments having metallic luster and are of aluminum flakes,
- is further coated with a secondary hydrated metal oxide layer comprising one or more layers,
- wherein on the surface of the thin platelet-like metal substrates there are subsequently formed: a layer formed by treating said surface with phosphoric acid compounds and/or boric acid compounds; a hydrated metal oxide layer formed of one or more metals selected from the group consisting of silicon, aluminum, zirconium and titanium; and a layer containing hydrated tin oxide,
- wherein the amount of phosphoric acid compounds and/or boric acid compounds used corresponds to 0.0001g - 0.1g as P₂O₅ and/or B₂O₃ per unit area of the surface (m²) of the thin platelet-like metal substrates; the amount of metal compounds used for preparing a hydrated metal oxide coated layer corresponds to 0.01g - 1.0g as metal oxide per unit area of the surface (m²) of the thin platelet-like metal substrates; and the amount of tin compounds used for preparing a hydrated tin oxide layer corresponds to 0.0008g - 1.0g as tin oxide (SnO₂) per unit area of the surface (m²) of the thin platelet-like metal substrates, and
- wherein the secondary hydrated metal oxide layer is a layer containing one or more hydrated metal oxides containing one or more hydrated metal oxides of one or more metals selected from the group consisting of titanium, aluminum, zirconium, tin, zinc, chromium, cobalt, silicon and boron.

2. Colored interference pigments having metallic luster according to claim 1, **characterized in that** the hydrated metal oxide which is formed on the surface of the thin platelet-like metal substrates treated with phosphoric acid compounds and/or boric acid compounds is hydrated silicon oxide.

3. Colored interference pigments having metallic luster according to claim 1 or 2, **characterized in that** the secondary hydrated metal oxide layer is prepared by a wet process method, a chemical vapor deposition method, or a physical vapor deposition method.

4. Colored interference pigments having metallic luster according to any of claims 1 to 3, **characterized in that** the secondary hydrated metal oxide layer is a multi-coated layer having different hydrated metal oxides.

5. Colored interference pigments having metallic luster according to claim 4, **characterized in that** the secondary hydrated metal oxide layer is a multi-coated layer formed by alternately coating a hydrated metal oxide layer having a high refractive index and a hydrated metal oxide layer having a low refractive index.

6. Colored interference pigments according to any of claims 1 to 5, wherein a translucent metal layer is further coated onto said secondary hydrated metal oxide layer.

7. Use of the colored interference pigments having metallic luster according to any one of claims 1 to 6 in paints, powder coatings and coated films, inks, security printing inks and printed matters, plastics, pellets and plastic moldings, and cosmetics.

8. Composition comprising the colored interference pigments having metallic luster according to any one of claims 1 to 6, in combination with one or more further pigments selected from the group consisting of organic pigments, inorganic pigments, effect pigments, fillers, and functional pigments.

## Patentansprüche

1. Farbige Interferenzpigmente mit Metallglanz, **dadurch gekennzeichnet, dass** die Oberfläche von stark korrosionsgehemmten dünnen plättchenförmigen Metallpigmenten,
- bei denen die stark korrosionsgehemmten dünnen plättchenförmigen Metallpigmente enthalten: an der Oberfläche von dünnen plättchenförmigen Metallsubstraten,
- eine Schicht, die durch Behandeln der Oberfläche mit Phosphorsäureverbindungen und/oder Borsäureverbindungen gebildet wird; und
- eine Schicht, die Zinnoxidhydrat als eine äußerste Schicht enthält,
- bei denen die dünnen plättchenförmigen Metallsubstrate Metallpigmente mit Metallglanz sind und aus Aluminiumplättchen sind,
- weiter mit einer sekundären Metalloxidhydratschicht enthaltend eine oder mehrere Schichten beschichtet wird,
- bei denen auf der Oberfläche der dünnen plättchenförmigen Metallsubstrate nacheinander gebildet werden: eine Schicht, die durch Behandeln der Oberfläche mit Phosphorsäureverbindungen und/oder Borsäureverbindungen gebildet wird; eine Metalloxidhydratschicht, die aus einem oder mehreren Metallen, die aus der Gruppe bestehend aus Silicium, Aluminium, Zirconium und Titan ausgewählt sind, gebildet wird; und eine Schicht, die Zinnoxidhydrat enthält,
- bei denen die Menge der verwendeten Phosphorsäureverbindungen und/oder Borsäureverbindungen 0,0001g - 0,1g als P₂O₅ und/oder B₂O₃ pro Flächeneinheit der Oberfläche (m²) der dünnen plättchenförmigen Metallsubstrate entspricht; die Menge der zur Herstellung einer aufgetragenen Metalloxidhydratschicht verwendeten Metallverbindungen 0,01g - 1,0g als Metalloxid pro Flächeneinheit der Oberfläche (m²) der dünnen plättchenförmigen Metallsubstrate entspricht; und die Menge der zur Herstellung einer Zinnoxidhydratschicht verwendeten Zinnverbindungen 0,0008g - 1,0g als Zinnoxid (SnO₂) pro Flächeneinheit der Oberfläche (m²) der dünnen plättchenförmigen Metallsubstrate entspricht, und
- bei denen die sekundäre Metalloxidhydratschicht eine Schicht enthaltend ein oder mehrere Metalloxidhydrate enthaltend ein oder mehrere Metalloxidhydrate eines oder mehrerer aus der Gruppe bestehend aus Titan, Aluminium, Zirconium, Zinn, Zink, Chrom, Cobalt, Silicium und Bor ausgewählter Metalle ist.

2. Farbige Interferenzpigmente mit Metallglanz nach Anspruch 1, **dadurch gekennzeichnet, dass** das Metalloxidhydrat, das auf der Oberfläche der mit Phosphorsäureverbindungen und/oder Borsäureverbindungen behandelten dünnen plättchenförmigen Metallsubstrate gebildet wird, Siliciumoxidhydrat ist.

3. Farbige Interferenzpigmente mit Metallglanz nach Anspruch 1 oder 2, **dadurch gekennzeichnet, dass** die sekundäre Metalloxidhydratschicht durch eine Nassverfahrenmethode, eine chemische Gasphasenabscheidungsmethode oder eine physikalische Gasphasenabscheidungsmethode hergestellt wird.

4. Farbige Interferenzpigmente mit Metallglanz nach beliebigen der Ansprüche 1 bis 3, **dadurch gekennzeichnet, dass** die sekundäre Metalloxidhydratschicht eine mehrlagig aufgetragene Schicht mit unterschiedlichen Metalloxidhydraten ist.

5. Farbige Interferenzpigmente mit Metallglanz nach Anspruch 4, **dadurch gekennzeichnet, dass** die sekundäre Metalloxidhydratschicht eine mehrlagig aufgetragene Schicht ist, die durch abwechselndes Auftragen einer Metalloxidhydratschicht mit einem hohen Brechungsindex und einer Metalloxidhydratschicht mit einem niedrigen Brechungsindex gebildet wird.

6. Farbige Interferenzpigmente nach beliebigen der Ansprüche 1 bis 5, bei denen weiter eine durchscheinende Metallschicht auf die sekundäre Metalloxidhydratschicht aufgetragen wird.

7. Verwendung der farbigen Interferenzpigmente mit Metallglanz nach einem beliebigen der Ansprüche 1 bis 6 in Farben, Pulverbeschichtungen und aufgetragenen Filmen, Druckfarben, Sicherheitsdruckfarben und Druck-Erzeugnissen, Kunststoffen, Pellets und Kunststoffformkörpern, und Kosmetika.

8. Zusammensetzung enthaltend die farbigen Interferenzpigmente mit Metallglanz nach einem beliebigen der Ansprüche 1 bis 6, zusammen mit einem oder mehreren weiteren aus der Gruppe bestehend aus organischen Pigmenten, anorganischen Pigmenten, Effektpigmenten, Füllstoffen und funktionellen Pigmenten ausgewählten Pigmenten.

## Revendications

1. Pigments d'interférence colorés présentant un lustre métallique, **caractérisés en ce que** la surface de pigments métalliques similaires à des plaquettes minces hautement anticorrosifs,
- dans lesquels les pigments métalliques similaires à des plaquettes minces hautement anticorrosifs comprennent : sur la surface de substrats métalliques similaires à des plaquettes minces :
- une couche qui est formée en traitant ladite surface à l'aide de composés d'acide phosphorique et/ou de composés d'acide borique ; et
- une couche qui contient de l'oxyde d'étain hydraté en tant que couche la plus externe,
- dans lesquels les substrats métalliques similaires à des plaquettes minces sont des pigments métalliques qui présentent un lustre métallique et sont constitués par des flocons d'aluminium,
- est en outre revêtue d'une couche d'oxyde métallique hydraté secondaire qui comprend une ou plusieurs couche(s),
- dans lesquels, sur la surface des substrats métalliques similaires à des plaquettes minces, sont formées successivement : une couche qui est formée en traitant ladite surface à l'aide de composés d'acide phosphorique et/ou de composés d'acide borique ; une couche d'oxyde métallique hydraté qui est formée par un métal ou par plusieurs métaux qui est/sont sélectionné(s) parmi le groupe qui est constitué par le silicium, l'aluminium, le zirconium et le titane ; et une couche qui contient de l'oxyde d'étain hydraté,
- dans lesquels la quantité de composés d'acide phosphorique et/ou de composés d'acide borique qui sont utilisés correspond à 0,0001 g - 0,1 g en tant que P₂O₅ et/ou B₂O₃ par aire unitaire de la surface (m²) des substrats métalliques similaires à des plaquettes minces ; la quantité de composés métalliques qui sont utilisés pour préparer une couche déposée/revêtue d'oxyde métallique hydraté correspond à 0,01 g - 1,0 g en tant qu'oxyde métallique par aire unitaire de la surface (m²) des substrats métalliques similaires à des plaquettes minces ; et la quantité de composés d'étain qui sont utilisés pour préparer une couche d'oxyde d'étain hydraté correspond à 0,0008 g - 1,0 g en tant qu'oxyde d'étain (SnO₂) par aire unitaire de la surface (m²) des substrats métalliques similaires à des plaquettes minces ; et
- dans lesquels la couche d'oxyde métallique hydraté secondaire est une couche qui contient un ou plusieurs oxyde(s) métallique(s) hydraté(s) qui contient/contiennent un ou plusieurs oxyde(s) métallique(s) hydraté(s) d'un métal ou de plusieurs métaux qui est/sont sélectionné(s) parmi le groupe qui est constitué par le titane, l'aluminium, le zirconium, l'étain, le zinc, le chrome, le cobalt, le silicium et le bore.

2. Pigments d'interférence colorés présentant un lustre métallique selon la revendication 1, **caractérisés en ce que** l'oxyde métallique hydraté qui est formé sur la surface des substrats métalliques similaires à des plaquettes minces qui sont traités à l'aide de composés d'acide phosphorique et/ou de composés d'acide borique est de l'oxyde de silicium hydraté.

3. Pigments d'interférence colorés présentant un lustre métallique selon la revendication 1 ou 2, **caractérisés en ce que** la couche d'oxyde métallique hydraté secondaire est préparée au moyen d'un procédé par processus par voie humide, d'un procédé de dépôt chimique en phase vapeur ou d'un procédé de dépôt physique en phase vapeur.

4. Pigments d'interférence colorés présentant un lustre métallique selon l'une quelconque des revendications 1 à 3, **caractérisés en ce que** la couche d'oxyde métallique hydraté secondaire est une couche à multiples revêtements/dépôts qui comporte différents oxydes métalliques hydratés.

5. Pigments d'interférence colorés présentant un lustre métallique selon la revendication 4, **caractérisés en ce que** la couche d'oxyde métallique hydraté secondaire est une couche à multiples revêtements/dépôts qui est formée en déposant en alternance une couche d'oxyde métallique hydraté qui présente un indice de réfraction élevé et une couche d'oxyde métallique hydraté qui présente un indice de réfraction faible.

6. Pigments d'interférence colorés selon l'une quelconque des revendications 1 à 5, dans lesquels une couche métallique translucide est en outre déposée sur ladite couche d'oxyde métallique hydraté secondaire.

7. Utilisation des pigments d'interférence colorés présentant un lustre métallique selon l'une quelconque des revendications 1 à 6 dans les peintures, les revêtements pulvérulents et les films revêtus/déposés, les encres, les encres d'impression de sécurité et les matériaux imprimés, les matières plastiques, les granules et les moulages en matière plastique, et les cosmétiques.

8. Composition comprenant les pigments d'interférence colorés présentant un lustre métallique selon l'une quelconque des revendications 1 à 6, en combinaison avec un ou plusieurs autre(s) pigment(s) qui est/sont sélectionné(s) parmi le groupe qui est constitué par les pigments organiques, les pigments inorganiques, les pigments d'effet, les agents de remplissage et les pigments fonctionnels.
